# EUROPÄISCHE PATENTSCHRIFT

(11) **EP 2 336 588 B1**
(45) Veröffentlichungstag und Bekanntmachung des Hinweises auf die Patenterteilung: **02.07.2014**
(21) Anmeldenummer: 10015558.9
(22) Anmeldetag: 13.12.2010
(51) Int. Cl.: F16D 23/14

(54) **Kupplungsbetätigungssystem**
Coupling actuation system
Système d'actionnement d'embrayage

(30) Priorität: 17.12.2009 DE 102009058629
(43) Veröffentlichungstag der Anmeldung: 22.06.2011
(73) Patentinhaber: Schaeffler Technologies GmbH & Co. KG, 91074 Herzogenaurach (DE)
(72) Erfinder: Honselmann, Sebastian, 77830 Bühlertal (DE); Ortmann, Simon, 77866 Rheinau-Linx (DE)

(56) Entgegenhaltungen:
- EP-A1- 2 017 491
- DE-A1- 10 114 844
- DE-A1-102009 011 809
- FR-A5- 2 183 472
- FR-A5- 2 224 019
- GB-A- 2 054 084
- US-A- 3 904 008

## Beschreibung

Die Erfindung betrifft ein Kupplungsbetätigungssystem gemäß dem Oberbegriff des Patentanspruchs 1.

Lager, insbesondere Ausrücklager, die mit einem Kupplungsbetätigungssystem in Form eines Zentralausrückers ("Concentric Slave Cylinder" - CSC) betätigbar sind, werden bei hydraulischen Kupplungssystemen in der Funktionskette zwischen Kupplungspedal und Kupplung eingesetzt. Das Lager besitzt dabei einen Lagerring, in welchem die Kraft des Zentralausrückers bei dessen Betätigung über einen Lagerträger einleitbar ist.

Aus der Druckschrift WO 2009/046693 A1 ist ein entsprechendes Einrücksystem für Doppelkupplungen bekannt, bei welchem die Kraft über 2 um 90° versetzte Punkte in den Lagerträger eingeleitet und auf den Lagerring aufgebracht wird. Durch die Krafteinleitung in 2 Punkten wird jedoch die Kraft nicht homogen verteilt. Dadurch wirken im Einleitungsbereich der Kraft sehr hohe Kräfte auf das Lager, während um 90° versetzt eine wesentlich geringere Last auf das Lager wirkt, da die verwendeten Blechlager und die Anbindungseinheiten meist nicht steif genug sind. Dadurch werden die Kugeln im Lager ständig mit wechselnden Lasten während eines Umlaufs beaufschlagt, wobei im Bereich der Auflage des Hebels auf die Kugel eine wesentlich höhere Last wirkt, als die für die sie ausgelegt wurde. Ferner kann sich das Lager so stark verformen, dass es zu einem Verschieben der Laufbahnen kommt. Beides führt zu starker Beanspruchung des Lagers und zu verkürzter Lebensdauer.

Aus der DE 10 2009 011 809 A1 ist ein Kupplungsbetätigungssystem gemäß dem Oberbegriff des Patentanspruchs 1 bekannt.

Die Aufgabe der Erfindung besteht darin, ein Kupplungsbetätigungssystem zu schaffen, welches bei einem Lager, das insbesondere einer 2-Punkt-Kraftbeaufschlagung ausgesetzt ist, eine homogene bzw. gleichmäßige Lastaufbringung gewährleistet und somit die Lebensdauer des Lagers erhöht.

Diese Aufgabe wird mit den Merkmalen des Patentanspruchs 1 gelöst. Vorteilhafte Ausgestaltungen ergeben sich aus den Unteransprüchen.

Das Kupplungsbetätigungssystem, welches eine Betätigungseinrichtung aufweist, die einen Lagerträger zur Krafteinleitung auf einen Lagerring einer Lagereinheit besitzt, weist erfindungsgemäß zwischen dem Lagerträger und dem Lagerring der Lagereinheit eine Wirkverbindung auf, die eine im Wesentlichen punktförmige Krafteinleitung aus Richtung der Betätigungseinrichtung in eine gleichmäßige Krafteinleitung auf die Lagereinheit umwandelt.

Dadurch wird eine gleichmäßige Kraftverteilung auf den Lagerring und somit die Lagereinheit des CSC sichergestellt, wodurch gewährleistet ist, dass die Kugeln des Lagers gleichmäßig belastet werden, was zur Erhöhung der Lebensdauer des Lagers beiträgt.

Dazu werden der Lagerträger und/oder der Lagerring und/oder ein zwischen Lagerträger und Lagerring angeordnetes Zwischenelement, zumindest bereichsweise, derart elastisch verformbar ausgelegt, dass trotz der punktförmigen Beaufschlagung eine gleichmäßige Krafteinleitung auf die Lagereinheit erfolgt.

Dies kann durch verschiedene konstruktive Maßnahmen erfolgen.

In einer ersten Variante weist der Lagerring, insbesondere der Lageraußenring, in Richtung zum Lagerträger einen Anlagebereich auf, der radial nach außen in einem Winkel α geneigt ist, so dass gewährleistet wird, dass sich der Anlagebereich elastisch verformen kann, wenn auf diesen eine axiale Kraft wirkt. Die Anlagefläche des Lagerträgers und der Anlagebereich des Lageraußenringes liegen somit nicht (wie herkömmlich üblich) flächig aneinander an.

Durch diesen im Winkel α aufgestellten Lageraußenring wird dieser als elastisches Element in das System aufgenommen. Dadurch wird die Last über dessen im Winkel α aufgestellten Anlagebereich in das Lager eingebracht. Im Bereich hoher Axialkräfte am Lageraußenring kann sich dieser durch die Neigung des Anlagebereiches im Winkel α etwas mehr elastisch verformen, während er bei einer geringen Last seine Form beibehält.

Dieser Effekt kann dadurch erhöht werden, dass der im Winkel α aufgestellte Anlagebereich des Lageraußenringes geschlitzt ausgeführt wird. Vorzugsweise werden radiale Schlitze in den Anlagebereich des Lageraußenringes eingebracht. Diese Schlitze ermöglichen dem Lageraußenring (dem Anlagebereich), sich flexibler an die Last anzupassen. Die Wirksamkeit wurde mittels einer FEM-Studie nachgewiesen.

Eine weitere Möglichkeit besteht darin,
- den Lagerträger im Bereich seiner Anlagefläche zur Lagereinheit und/oder
- ein zwischen Lagerring und Lagerträger angeordnetes Zwischenelement mit einer gewellten, insbesondere sinusförmigen Kontur zu versehen. Die gewellte/sinusförmige Kontur des Lagerträgers oder des Zwischenelementes verformt sich entsprechend der aufgebrachten, sich steigernden Last in Richtung einer nahezu ebenen Fläche elastisch.

Das Zwischenelement ist dabei zwischen Lageraußenring und Lagerträger angeordnet und vorzugsweise in Form einer entsprechend gewellten Feder oder einer Stahlscheibe ausgebildet. Sobald Last über die Hebelspitzen auf die Lagereinheit und somit auf den Lageraußenring bzw. das Zwischenelement aufgebracht wird, passt sich die Sinuskontur kontinuierlich an, bis im Auslegungslastfall (Maximallast vorzugsweise Hauptlast) eine nahezu ebene Fläche erreicht wird. Die Fläche darf jedoch nicht vollständig eben sein und besonders im Bereich der Lasteinleitung durch die Hebelspitzen unter Last nicht plan auf dem Lagerträger aufliegen, da sonst wiederum eine steife Verbindung hergestellt würde, wodurch die elastische Wirkung des Systems verloren ginge. Bei der Verwendung eines separaten Zwischenelementes muss darauf geachtet werden, dass dieses verdrehgesichert wird. Die Verwendung einer Feder ist von der aufgebrachten Kraft abhängig. Die Feder muss so ausgelegt werden, dass die maximale Kraft, mit welcher das Kupplungssystem beaufschlagt wird, geringer ist als die Kraft der Feder, da sich diese sonst plan anlegen würde.

Die Gestaltung des Kupplungssystems der Erfindung besteht darin, dass der Lagerträger im Bereich der Lasteinleitung partiell derart geschwächt wird, dass sich weniger steife Bereiche mit steiferen Bereichen abwechseln, wodurch mehr Last in die steiferen Bereiche des Lagerträgers eingeleitet wird. Dazu kann der Lagerträger im Bereich seiner Anlagefläche zur Lagereinheit partiell geschwächt sein und Ausnehmungen in der Anlagefläche aufweisen, wobei in jede Ausnehmung ein oder mehrere Kunststoffelemente eingesetzt sind, welche zur Verstärkung des Effektes Durchbrüche aufweisen können. Auch hierdurch erreicht man den gewünschten Steifigkeitsunterschied.

Durch das Einsetzen eines schwächeren Werkstoffes in diesem Bereich wird mehr Last in die steiferen Bereiche des Lagerträgers eingeleitet, wodurch wieder eine homogenere Lastverteilung erreicht wird.

Durch die Verwendung
- eines aufgestellten Lageraußenringes (mit oder ohne radiale Einschnitte)
- einer sinusförmigen Kontur, die auf ein Teil aufgebracht wird einer sinusförmigen Feder oder Scheibe, die in das System eingebracht ist und kraftmäßig auf das System abgestimmt ist
- einem Zusatzteil aus einem elastischerem Werkstoff als der Lagerträger selbst, das in eine Ausnehmung des Lagerträgers eingesetzt ist, die sich in einer Ebene mit der Krafteinleitung befindet
entweder einzeln oder in Kombination wird eine homogene Verteilung der durch das CSC aufgebrachten Last auf eine Lagereinheit, insbesondere in Form eines Ausrücklagers eines Kupplungsbetätigungssystems in Verbindung mit einer 2 Punkt-Krafteinleitung durch einen Hebel geschaffen. Die Last wird auf den Lageraußenring gleichmäßig verteilt und dadurch die Lebensdauer des Lagers erhöht. Weiterhin kann die Dimensionierung des Lagers dem Lastfall entsprechend einfacher angepasst werden.

Die Erfindung wird nachfolgend anhand von Ausführungsbeispielen und zugehörigen Zeichnungen näher erläutert.

Es zeigen:
- Figur 1: ein Ausrücklager und einen Lagerträger im Längsschnitt, wobei der Lager außenring in Richtung zum Lagerträger einen im Winkel α geneigten Anlagebereich aufweist,
- Figur 2: eine Darstellung, ähnlich wie in Figur 1, jedoch mit Schlitzen im Anlagebereich des Lageraußenrings,
- Figur 3: eine Einzeldarstellung des Lageraußenrings gemäß Figur 2 in der Vorderansicht ,
- Figur 4: ein Ausrücklager und einen Lagerträger, zwischen welchem ein Stahlring mit einer sinusförmigen Kontur angeordnet ist,
- Figur 5: eine Darstellung des Ausrücklagers mit Lagerträger ähnlich Figur 4 um 90° gedreht,
- Figur 6: die Seitenansicht der Stahlscheibe gemäß Figur 4,
- Figur 7: die dreidimensionale Seitenansicht der Stahlscheibe gemäß Figur 6,
- Figur 8: ein Diagramm der Sinuskontur über den Umfang des Lagerträgers,
- Figur 9: eine dreidimensionale Einzeldarstellung des Lagerträgers, der im Bereich seiner Anlagefläche zur Lagereinheit partiell geschwächt ist und dazu Ausnehmungen in der Anlagefläche aufweist, in die Kunststoffelemente eingesetzt sind,
- Figur 10: Lagerträger gemäß Figur 9 und Lagereinheit (Ausrücklager) im Längsschnitt.

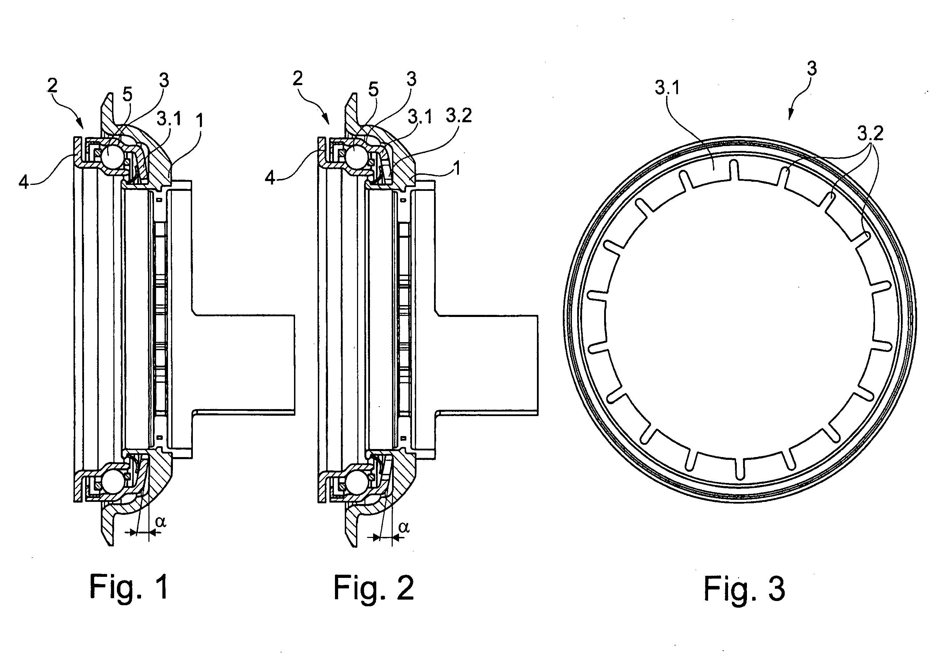

Das Kupplungsbetätigungssystem weist gemäß der Darstellungen in den Figuren 1, 2, 4, 5 und 10 einen Zentralausrücker auf, von welchem hier nur der Lagerträger 1 dargestellt ist, der bei Betätigung des Zentralausrückers auf eine Lagereinheit in Form eines Ausrücklagers 2 wirkt.

Das Ausrücklager 2 besitzt dabei einen sich an den Lagerträger 1 anschließenden Lageraußenring 3 sowie einen Lagerinnenring 4, zwischen denen sich Wälzkörper 5 befinden.

Gemäß Figur 1 weist der Lageraußenring 3 in Richtung zum Lagerträger 1 einen im Winkel α geneigten Anlagebereich 3.1 auf, wodurch eine gewisse Elastizität gewährleistet ist, durch die eine homogene Krafteinleitung in das Lager bei dessen Betätigung durch den Lagerträger 1 erfolgt. Im Bereich hoher Axialkräfte am Lageraußenring 3 kann sich dieser dadurch etwas mehr elastisch verformen, während er bei einer geringen Last seine Form beibehält.

Dieser Effekt kann noch verstärkt werden, wenn der Lageraußenring 3 in seinem Anlagebereich 3.1 zusätzlich zu der Neigung im Winkel α Figur 2 radiale Schlitze 3.2 aufweist, wie aus Figur 2 und der Einzeldarstellung des Lageraußenrings 3 in der Draufsicht gemäß Figur 3 ersichtlich ist.

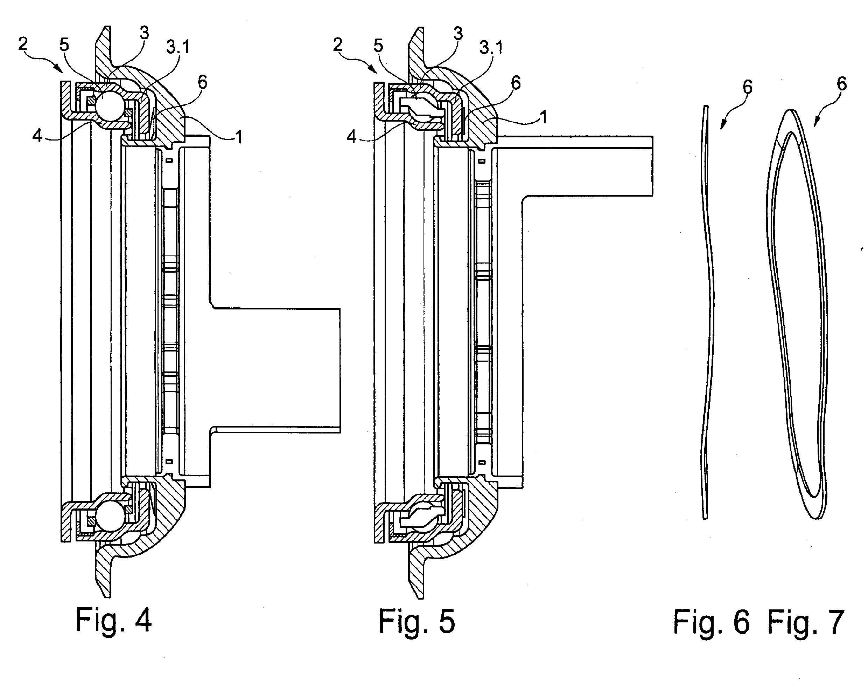

In Figur 4 und 5 werden ein Ausrücklager 2 und ein Lagerträger 1 dargestellt, zwischen welchen ein Zwischenelement in Form einer Stahlscheibe 6 mit einer sinusförmigen Kontur angeordnet ist, wobei Figur 4 und Figur 5 zueinander um 90° versetzt sind. Die Stahlscheibe 6 wird zur Verdeutlichung der sinusförmigen Kontur, durch welche eine axiale Federwirkung erzielt wird, in Figur 6 in der Seitenansicht und in Figur 7 in dreidimensionaler Ansicht dargestellt. Jeweils um 90° zueinander versetzt, wechselt sich eine Erhebung mit einer Vertiefung ab.

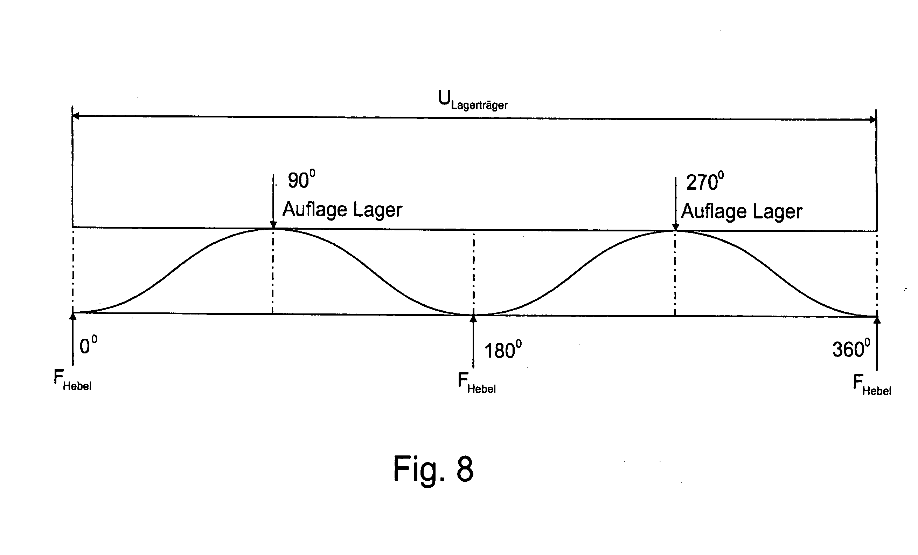

Die Prinzipskizze des Diagramms der Lastaufbringung über den Umfang U_{Lagerträger} des Lagerträgers bei Verwendung einer Stahlscheibe gemäß Figur 6 und 7 oder bei einer sinusförmigen Gestaltung der Anlagefläche des Lagerträgers wird in Figur 8 gezeigt. Sobald die Last F_{Hebei} über die Hebespitzen bei 0°, 180° und 360° auf das Lager aufgebracht wird und das Lager bei 90° und 270° an der Stahlscheibe bzw. an der sinusförmigen Kontur des Lagerträgers anliegt, passt sich die Sinuskontur kontinuierlich an, bis eine nahezu ebene Fläche erreicht wird.

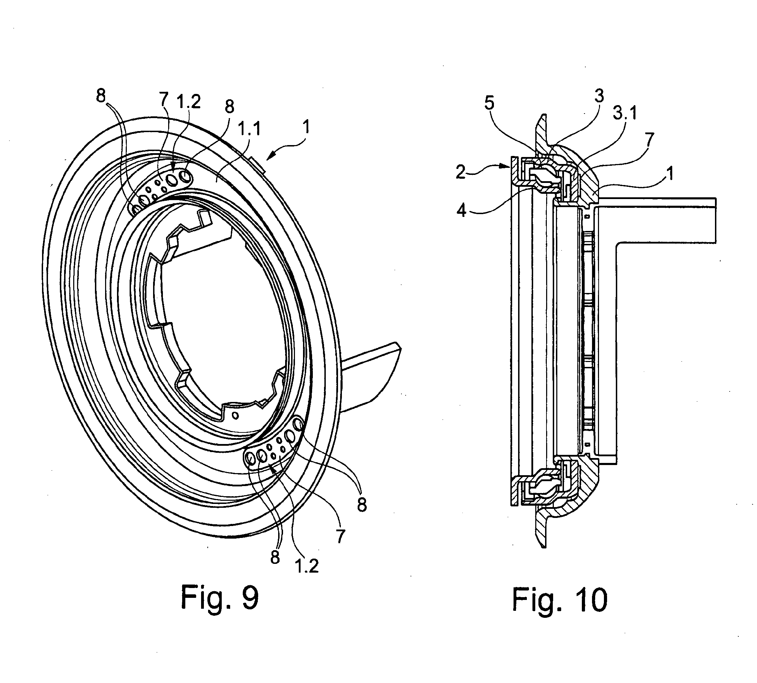

Figur 9 zeigt die dreidimensionale Einzeldarstellung des Lagerträgers 1 und Figur 10 die Kombination des Lagerträgers 1 gemäß Figur 9 mit einer Lagereinheit in Form eines Ausrücklagers 2 im Längsschnitt. Der Lagerträger 1 ist im Bereich seiner Anlagefläche 1.1 zur Lagereinheit (Ausrücklager 2) partiell geschwächt und weist dazu Ausnehmungen 1.2 in der Anlagefläche 1.1 auf, in die Kunststoffelemente 7 eingesetzt wurden, die mit Durchbrüchen 8 versehen sind. Dadurch wechseln sich weniger steife Bereiche mit steiferen Bereichen ab. Durch das Einsetzen des schwächeren Werkstoffes in Form der Kunststoffelemente 7 wird mehr Last in die steiferen Bereiche des Lagerträgers 1 eingeleitet, wodurch eine homogenere Lastverteilung erreicht wird.

Neben den dargestellten Ausführungsbeispielen sind selbstverständlich auch andere konstruktive Ausführungsvarianten möglich, um mit der Einbringung einer gezielten Weichheit in das Kupplungsbetätigungssystem im Bereich der Krafteinleitung die Last homogener auf das Ausrücklager zu verteilen, ohne dabei die erforderliche Gesamtsteifigkeit des Systems zu gefährden.

### Bezugszeichenliste

- 1: Lagerträger
- 1.1: Anlagefläche
- 1.2: Ausnehmungen
- 2: Ausrücklager
- 3: Lageraußenring
- 3.1: Anlagebereich
- 3.2: Schlitze
- 4: Lagerinnenring
- 5: Wälzkörper
- 6: Stahlscheibe
- 7: Kunststoffelemente
- 8: Durchbrüche
- F_{Hebel}: Last über die Hebespitzen
- U_{Lagerträger}: Umfang des Lagerträgers
- α: Winkel

## Patentansprüche

1. Kupplungsbetätigungssystem mit einem Ausrücklager (2) und einer Betätigungseinrichtung, die einen Lagerträger (1) zur Krafteinleitung auf einen Lagerring (3, 4) des Ausrücklagers (2) besitzt, wobei zwischen dem Lagerträger (1) und dem Lagerring (3, 4) des Ausrücklagers (2) eine Wirkverbindung besteht, die eine im Wesentlichen punktförmige Krafteinleitung aus Richtung der Betätigungseinrichtung in eine gleichmäßige Krafteinleitung auf das Ausrücklager (2) umwandelt, **dadurch gekennzeichnet, dass** der Lagerträger (1) im Bereich seiner Anlagefläche (1.1) zum Ausrücklager (2) durch Ausnehmungen (1.2) in der Anlagefläche (1.1) partiell derart geschwächt ist, dass sich weniger steife Bereiche mit steiferen Bereichen abwechseln und mehr Last in die steiferen Bereiche des Lagerträgers (1) einleitbar ist, wobei in jede Ausnehmung (1.2) ein oder mehrere Kunststoffelemente (7) eingesetzt ist/sind.

2. Kupplungsbetätigungssystem nach Anspruch 1, **dadurch gekennzeichnet, dass** das oder die Kunststoffelement (7) Durchbrüche (8) aufweist/aufweisen.

3. Kupplungsbetätigungssystem nach Anspruch 1 oder 2, **dadurch gekennzeichnet, dass** der Lagerträger (1) und/oder der Lagerring (3, 4) und/oder ein zwischen Lagerträger (1) und Lagerring (3, 4) angeordnetes Zwischenelement zumindest bereichsweise so elastisch verformbar sind, dass eine gleichmäßige Krafteinleitung auf das Ausrücklager (2) erfolgt.

4. Kupplungssystem nach einem der Ansprüche 1 bis 3, **dadurch gekennzeichnet, dass** der Lagerring (3, 4) ein Lageraußenring (3) ist, der in Richtung zum Lagerträger (1) einen Anlagebereich aufweist, der radial nach außen in einem, eine elastische BeaufschlagungNerformung gewährleistenden, Winkel (α) geneigt ist.

5. Kupplungssystem nach Anspruch 4, **dadurch gekennzeichnet, dass** der Lageraußenring (3) in seinem zum Lagerträger (1) gerichteten Anlagebereich Durchbrüche (3.2) aufweist.

6. Kupplungssystem nach einem der Ansprüche 1 bis 5, **dadurch gekennzeichnet, dass**
- der Lagerträger (1) im Bereich seiner Anlagefläche zur Ausrücklager (2) und/oder
- ein zwischen Lagerring (3, 4) und Lagerträger (1) angeordnetes Zwischenelement eine gewellte, insbesondere sinusförmige, Kontur aufweist.

7. Kupplungssystem nach Anspruch 6, **dadurch gekennzeichnet, dass** sich die gewellte bzw. sinusförmige Kontur des Lagerträgers (1) oder des Zwischenelementes entsprechend der aufgebrachten sich steigernden Last in Richtung einer nahezu ebenen Fläche elastisch verformt.

8. Kupplungssystem nach Anspruch 6 oder 7, **dadurch gekennzeichnet, dass** das Zwischenelement zwischen Lageraußenring (3) und Lagerträger (1) angeordnet und in Form einer Feder oder einer Stahlscheibe (6) ausgebildet ist.

9. Kupplungssystem nach Anspruch 8, **dadurch gekennzeichnet, dass** die maximale Kraft, mit welcher das Kupplungssystem beaufschlagt wird, geringer ist als die Kraft der Feder oder der Stahlscheibe (6).

## Claims

1. Clutch actuation system with a disengaging bearing (2) and with an actuation device which possesses a bearing carrier (1) for the introduction of force to a bearing ring (3, 4) of the disengaging bearing (2), there being between the bearing carrier (1) and the bearing ring (3, 4) of the disengaging bearing (2) an operative connection which converts an essentially punctiform introduction of force from the direction of the actuation device into a uniform introduction force to the disengaging bearing (2), **characterized in that** the bearing carrier (1) is partially weakened, in the region of its bearing surface (1.1) with respect to the disengaging bearing (2), by means of recesses (1.2) in the bearing surface (1.1), in such a way that less rigid regions alternate with more rigid regions and more load can be introduced into the more rigid regions of the bearing carrier (1), one or more plastic elements (7) being inserted into each recess (1.2).

2. Clutch actuation system according to Claim 1, **characterized in that** the plastic element or plastic elements (7) has/have perforations (8).

3. Clutch actuation system according to Claim 1 or 2, **characterized in that** the bearing carrier (1) and/or the bearing ring (3, 4) and/or an intermediate element arranged between the bearing carrier (1) and bearing ring (3, 4) are elastically deformable, at least in regions, such that the uniform introduction of force to the disengaging bearing (2) takes place.

4. Clutch system according to one of Claims 1 to 3, **characterized in that** the bearing ring (3, 4) is a bearing outer ring (3) which has in the direction towards the bearing carrier (1) a bearing region which is inclined radially outwards at an angle (α) which ensures elastic action/deformation.

5. Clutch system according to Claim 4, **characterized in that** the bearing outer ring (3) has perforations (3.2) in its bearing region directed towards the bearing carrier (1).

6. Clutch system according to one of Claims 1 to 5, **characterized in that**
- the bearing carrier (1), in the region of its bearing surface with respect to the disengaging bearing (2), and/or
- an intermediate element arranged between the bearing ring (3, 4) and bearing carrier (1) have/has a corrugated, in particular sinusoidal, contour.

7. Clutch system according to Claim 6, **characterized in that** the corrugated or sinusoidal contour of the bearing carrier (1) or of the intermediate element is elastically deformed in the direction of a virtually planar surface according to the increasing load which is applied.

8. Clutch system according to Claim 6 or 7, **characterized in that** the intermediate element is arranged between the bearing outer ring (3) and bearing carrier (1) and is designed in the form of a spring or of a steel washer (6).

9. Clutch system according to Claim 8, **characterized in that** the maximum force which acts upon the clutch system is lower than the force of the spring or of the steel washer (6).

## Revendications

1. Système d'actionnement d'embrayage comprenant un palier de débrayage (2) et un dispositif d'actionnement qui possède un support de palier (1) pour l'introduction de force sur une bague de palier (3, 4) du palier de débrayage (2), une liaison fonctionnelle existant entre le support de palier (1) et la bague de palier (3, 4) du palier de débrayage (2), laquelle liaison fonctionnelle convertit une introduction de force essentiellement ponctuelle provenant de la direction du dispositif d'actionnement en une introduction de force uniforme sur le palier de débrayage (2), **caractérisé en ce que** le support de palier (1), dans la région de sa face d'appui (1.1) vers le palier de débrayage (2), est partiellement affaibli par des évidements (1.2) dans la face d'appui (1.1) de telle sorte que des régions moins rigides alternent avec des régions plus rigides et que plus de charge puisse être introduite dans les régions plus rigides du support de palier (1), un ou plusieurs éléments en plastique (7) est/étant inséré(s) dans chaque évidement (1.2).

2. Système d'actionnement d'embrayage selon la revendication 1, **caractérisé en ce que** le ou les éléments en plastique (7) présente(nt) des orifices (8) .

3. Système d'actionnement d'embrayage selon la revendication 1 ou 2, **caractérisé en ce que** le support de palier (1) et/ou la bague de palier (3, 4) et/ou un élément intermédiaire disposé entre le support de palier (1) et la bague de palier (3, 4) peuvent être déformés élastiquement au moins en partie de telle sorte qu'il se produise une introduction de force uniforme sur le palier de débrayage (2).

4. Système d'embrayage selon l'une quelconque des revendications 1 à 3, **caractérisé en ce que** la bague de palier (3, 4) est une bague extérieure de palier (3) qui présente, dans la direction du support de palier (1), une région d'appui qui est inclinée radialement vers l'extérieur suivant un angle (α) garantissant une sollicitation/déformation élastique.

5. Système d'embrayage selon la revendication 4, **caractérisé en ce que** la bague extérieure de palier (3) présente, dans sa région d'appui orientée vers le support de palier (1), des orifices (3.2).

6. Système d'embrayage selon l'une quelconque des revendications 1 à 5, **caractérisé en ce que**
- le support de palier (1) , dans la région de sa face d'appui vers le palier de débrayage (2), et/ou
- un élément intermédiaire disposé entre la bague de palier (3, 4) et le support de palier (1) présente un contour ondulé, en particulier de forme sinusoïdale.

7. Système d'embrayage selon la revendication 6, **caractérisé en ce que** le contour ondulé ou de forme sinusoïdale du support de palier (1) ou de l'élément, intermédiaire se déforme élastiquement en fonction de la charge croissante appliquée dans la direction d'une face pratiquement plane.

8. Système d'embrayage selon la revendication 6 ou 7, **caractérisé en ce que** l'élément intermédiaire est disposé entre la bague extérieure de palier (3) et le support de palier (1) et est réalisé sous forme d'un ressort ou d'un disque en acier (6).

9. Système d'embrayage selon la revendication 8, **caractérisé en ce que** la force maximale avec laquelle le système d'embrayage est sollicité est inférieure à la force du ressort ou du disque en acier (6).
